# EUROPEAN PATENT APPLICATION

(11) **EP 1 473 587 A1**
(43) Date of publication of application: **03.11.2004**
(21) Application number: 03026666.2
(22) Date of filing: 19.11.2003
(51) Int. Cl.: G02F 1/225

(54) **Single-electrode push-pull configuration for semiconductor PIN modulators**

(30) Priority: 10.04.2003 US 411874
(71) Applicant: Northrop Grumman Corporation, Los Angeles, CA 90067-2199 (US)
(72) Inventor: Scott, David C., Lakewood CA 90715 (US); Vang, Timothy A., San Dimas CA 91773 (US); Wang, Wenshen, Torrance CA 90505 (US); Kunkee, Elizabeth T., Manhattan Beach CA 90266 (US)
(74) Representative: Schmidt, Steffen J., Dipl.-Ing.

(57) **Abstract**

A single-electrode, push-pull semiconductor PIN Mach-Zehnder modulator (10) that includes first and second PIN devices (12, 14) on a substrate (16). Intrinsic layers (22, 28) of the devices (12, 14) are the active regions of two arms (50, 52) of a Mach-Zehnder interferometer. An outer electrode (38) is connected to the N layer (24) of the first PIN device (12) and a center electrode (40) is connected to the P layer (20) of the first PIN device (12). An outer electrode (42) is connected to the P layer (26) of the second PIN device (14) and the center electrode (40) is connected to the N layer (30) of the second PIN device (14). An RF modulation signal biases the PIN devices (12, 14) in opposite directions and causes the index refraction of the intrinsic layers (22, 28) to change in opposite directions to give a push-pull modulation effect.

## Description

### BACKGROUND OF THE INVENTION

### 1. Field of the Invention

This invention relates generally to a semiconductor PIN Mach-Zehnder modulator and, more particularly, to a semiconductor PIN Mach-Zehnder modulator employing a single-electrode push-pull configuration.

### 2. Discussion of the Related Art

Optical modulators are known in the art that use an electrical signal to frequency modulate an optical signal to impress information thereon. Optical modulators of this type that operate with low modulation voltages are needed in analog photonic link applications to improve link gain and noise figure. One class of modulators that operate at low modulation voltages are semiconductor modulators that employ PIN semiconductor devices where the optical wave propagates down an optical waveguide that includes an active region contained within the intrinsic layer in the device. An RF signal is applied to electrodes in contact with the P and N layers of the device to provide the modulation voltage across the intrinsic layer, where the electrodes define an RF transmission line.

One type of optical modulator that employs PIN semiconductor devices is a Mach-Zehnder modulator (MZM). An MZM employs a Mach-Zehnder interferometer that splits the optical wave being modulated into first and second waveguides, where one of the waveguides extends through the intrinsic layer of a first PIN semiconductor device and the other waveguide extends through the intrinsic layer of a second PIN semiconductor device. Separate electrodes are connected to the separate N and P layers of the first and second PIN devices to modulate the optical wave propagating therethrough. Conventional semiconductor PIN MZMs have only used single electrode drives where the second arm of the interferometer is a passive optical waveguide.

In other types of MZMs, such as lithium niobate or polymer MZMs, the advantages of employing push-pull modes of operation, known to those skilled in the art, have been demonstrated. In the push-pull configuration, typically the RF power delivered to the first arm is applied 180 degrees out of phase with the RF power delivered to the second arm. In this case, the change in phase in the two arms are equal and opposite which has the effect of increasing the amplitude modulation of the optical field and eliminating chirp.

The known push-pull MZMs are typically implemented by splitting the input RF power using a 180 degree hybrid power splitter, and then applying the two RF outputs to the two arms of the modulator. However, this technique has the disadvantage of requiring broadband power splitters that must maintain strict phase control over the frequency band of interest. Because these devices use power splitting, the actual improvement in the reduction of the modulation voltage is only a factor of √2 over that of the signal arm drive modulators. Other push-pull MZM designs effect equal and opposite optical phase shifts in the two active arms using a single coplanar waveguide (CPW) electrode design. These electrode designs have been implemented in both lithium niobate as well as polymer-based MZMs. However, to date, no CPW structure compatible with the design of a semiconductor based MZM have been implemented to realize a 2X reduction in RF drive voltage.

What is needed is a semiconductor PIN MZM that employs a single-electrode push-pull configuration to achieve a true 2X reduction in the RF drive voltage over that of the single arm drive modulators.

### SUMMARY OF THE INVENTION

In accordance with the teachings of the present invention, a semiconductor PIN MZM is disclosed that employs a single-electrode, push-pull configuration to reduce the necessary modulation voltage. The modulator includes a first PIN device and second PIN device positioned on a substrate spaced apart from each other. The intrinsic (I) layer of the first PIN device is the active region of a first arm of a Mach-Zehnder interferometer, and the intrinsic layer of the second PIN device is the active region of a second arm of the interferometer. These intrinsic layers may consist of either bulk or quantum-well (QW) semiconductor materials. A first outer electrode is electrically coupled to the N layer of the first PIN device, and a center electrode is electrically coupled to the P layer of the first PIN device. A second outer electrode is electrically coupled to the P layer of the second PIN device and the center electrode is electrically coupled to the N layer of the second PIN device. An RF modulation signal is applied to the center electrode while the first and second outer electrodes are held at ground potential. The result is to change the bias on the first and second PIN devices in opposite directions, which causes the index of refraction of the intrinsic layers to change in opposite directions to give a push-pull modulation effect.

Additional objects, advantages and features of the present invention will become apparent from the following description and appended claims, taken in conjunction with the accompanying drawings.

### BRIEF DESCRIPTION OF THE DRAWINGS

Figure 1 is a schematic top view of a semiconductor PIN MZM employing a push-pull electrode configuration, according to an embodiment of the present invention;

Figure 2 is a cross-sectional view of the PIN MZM through line 2-2 in Figure 1; and

Figure 3 is a schematic diagram showing the DC bias connections to the PIN devices in the modulator shown in Figure 1.

### DETAILED DESCRIPTION OF THE EMBODIMENTS

The following discussion of the embodiments of the invention directed to a single-electrode, push-pull semiconductor PIN MZM is merely exemplary in nature, and is in no way intended to limit the invention or its applications or uses.

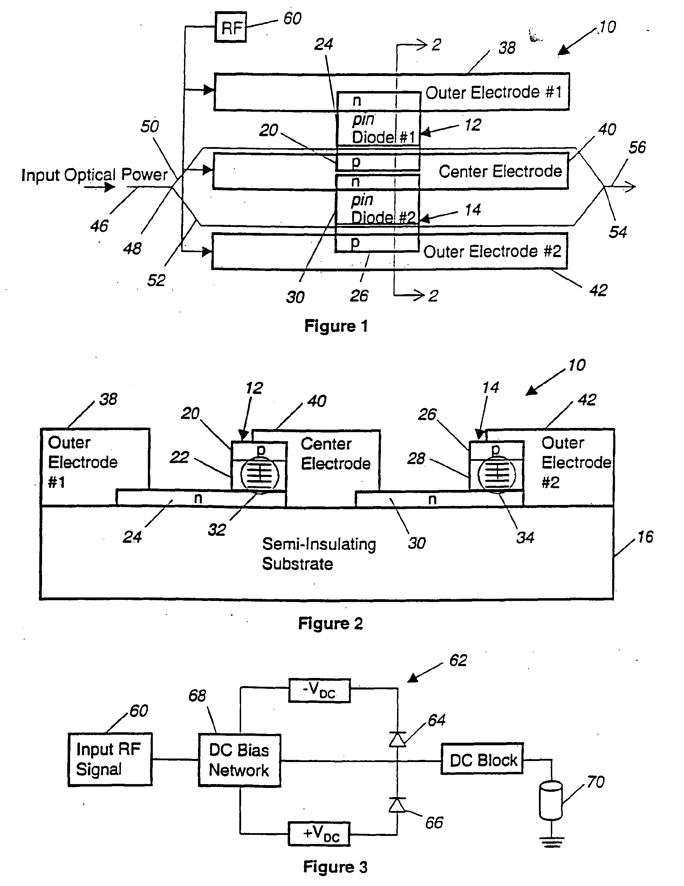

Figure 1 is a top view and figure 2 is a cross-sectional view through line 2-2 in Figure 1 of a semiconductor PIN Mach-Zehnder modulator 10. The modulator 10 includes a first PIN device 12 and a second PIN device 14 spaced apart from each other and formed on a semi-insulating substrate 16. The PIN devices 12 and 14 are conventional semiconductor devices, and the substrate 16 and the device layers of the PIN devices 12 and 14 can be any suitable semiconductor material, such as InP, for the purposes described herein. The PIN device 12 includes a P-type layer 20, an intrinsic layer 22 and an N-type layer 24, and the PIN device 14 includes a P-type layer 26, an intrinsic layer 28 and an N-type layer 30. The intrinsic layer 22 defines an active waveguide region 32 within the device 12, and the intrinsic layer 28 defines an active waveguide region 34 within the device 14.

A first outer metal electrode 38 is formed on the substrate 16 in electrical contact with the N-type layer 24 of the PIN device 12. A center metal electrode 40 is formed on the substrate 16 in electrical contact with the P-type layer 20 of the PIN device 12 and the N-type layer 30 of the PIN device 14, but is electrically isolated from the intrinsic layer 22 and the N-type layer 24 of the device 12. A second outer metal electrode 42 is formed on the substrate 16 in electrical contact with the P-type layer 26 of the device 14, but is electrically isolated from the intrinsic layer 28 and the N-type layer 30 of the PIN device 14.

The optical signal to be modulated is applied to an input waveguide 46, and is split by a splitter 48 into a first optical arm 50 and a second optical arm 52. The first optical arm 50 passes through the waveguide region 32 of the PIN device 12, and the second optical arm 52 passes through the waveguide region 34 of the PIN device 14. The first and second optical arms 50 and 52 are then combined by a combiner 54 so that the combined optical signal is injected into an output waveguide 56. The combination of the input waveguide 46, the splitter 48, the first and second arms 50 and 52, the combiner 54 and the output waveguide 56 make up a Mach-Zehnder interferometer.

An RF signal from an RF signal source 60 is applied to each of the electrodes 38, 40 and 42. Figure 3 is a schematic diagram of a biasing system 62 of the modulator 10 that includes the source 60, and shows the DC bias connections to the PIN devices 12 and 14. A diode 64 represents the PIN device 12 and a diode 66 represents the PIN device 14. A DC bias from a DC bias network 68 is applied to the electrodes 38, 40 and 42 and provides a DC bias to the diodes 64 and 66, where the diodes 64 and 66 are both reverse biased. An output RF load 70 terminates the electrodes 38, 40 and 42.

The modulator 10 is a semiconductor PIN Mach-Zehnder modulator that employs a single-electrode push-pull configuration. In this configuration, changes in the refractive index of the intrinsic layers 22 and 28 have a doubling effect as a result of the push-pull operation of RF signal levels applied to the electrodes 38, 40 and 42. Particularly, an RF signal from the RF signal source 60 is applied to the electrodes 38, 40 and 42 so that the RF signal propagates down the electrodes 38, 40 and 42 in phase with each other. The RF signal shifts, in opposite directions, the DC bias applied to the electrodes 38, 40 and 42, so that a rise in the RF signal level causes the index of refraction of the intrinsic layers 22 and 28 to move in one direction, and a fall in the RF signal level causes the index of refraction of the intrinsic layers 22 and 28 to move in an opposite direction.

Because the first outer electrode 38 is electrically coupled to the N-type layer 24 of the PIN device 12 and the center electrode 40 is electrically coupled to the P-type layer of the PIN device 12, a rise or fall in the instantaneous voltage will change the index of refraction of the intrinsic layer 22 accordingly. Likewise, because the center electrode 40 is electrically coupled to the N-type layer 30 of the PIN device 14 and the second outer electrode 42 is electrically coupled to the P-type layer 26 of the PIN device 14, a rise or fall in the instantaneous voltage will change the index of refraction of the intrinsic layer 28 accordingly. Thus, because the same RF signal is applied to all of the electrodes 38, 40 and 42 in phase, the instantaneous voltage on the PIN devices 12 and 14 will change in opposite and equal directions as the RF modulation voltage changes, giving the push-pull operation of the modulator 10. Therefore, the modulation on the optical signal propagating through the intrinsic waveguides 32 and 34 will be doubled when the signals are combined by the combiner 54, resulting in less RF signal power needed to provide a certain amount of modulation.

The active regions 32 and 34 of the PIN devices 12 and 13 exist in the gap regions of the coplanar waveguide (CPW) transmission line between the center electrode 40 and the two outer electrodes 38 and 42. The PIN devices 12 and 14 are attached to the center line with opposite polarity. The DC bias network 68 provides a reverse bias voltage to the two PIN devices 12 and 14. The electrodes 38, 40 and 42 that make up the CPW transmission line are DC coupled from the RF signal such that the DC ground is the center electrode 40 and the DC bias voltages are applied to the outer electrodes 38 and 42. In an RF sense, the two outer electrodes 38 and 42 are ground and the center electrode 40 is signal. As a result of the opposite polarity of the connections to the PIN devices 12 and 14, during the first half of the RF cycle, one of the PIN devices 12 or 14 will experience an increase in reverse bias, causing an increase in the optical index. The other PIN device 12 or 14 will experience a decrease in reverse bias causing a decrease in the optical index. Thus, in this configuration, the total index of refraction change can be twice that of any single arm drive for the same input power.

The foregoing discussion discloses and describes merely exemplary embodiments of the present invention. One skilled in the art will readily recognize from such discussion and from the accompanying drawings and claims, that various changes, modifications and variations can be made therein without departing from the spirit and scope of the invention as defined in the following claims.

## Claims

1. A push-pull semiconductor PIN Mach-Zehnder modulator comprising:
a substrate;
a first PIN device formed on the substrate and including a P-type layer, an intrinsic layer and an N-type layer;
a second PIN device formed on the substrate and including a P-type layer, an intrinsic layer and N-type layer;
a first electrode formed on the substrate electrically coupled to the N-type layer of the first PIN device;
a second electrode formed on the substrate electrically coupled to the P-type layer of the first PIN device and the N-type layer of the second PIN device;
a third electrode formed on the substrate electrically coupled to the P-type layer of the second PIN device; and
a Mach-Zehnder interferometer including a first optical path and a second optical path, said intrinsic layer of the first PIN device being positioned in the first optical path and said intrinsic layer of said second PIN device being positioned in the second optical path, said intrinsic layers having an optical index of refraction that is modified in response to the application of an electrical field, said first, second and third electrodes being responsive to RF modulation signals so that the index of refraction of the intrinsic layer of the first PIN device and the index of refraction of the intrinsic layer of the second PIN device change in opposite directions in response to the modulation signals and affect optical waves propagating through the first and second paths in opposite directions.

2. The modulator according to claim 1 further comprising a biasing network, said biasing network providing a DC bias voltage to the electrodes to bias the first and second PIN devices.

3. The modulator according to claim 2 wherein the DC bias voltage reverse biases the first and second PIN devices.

4. The modulator according to claim 2 wherein the second electrode is a DC ground and the first and third electrodes provide the DC bias voltage to the PIN devices.

5. The modulator according to claim 2 wherein the biasing network includes an RF signal source that applies the RF modulation signals to the first, second and third electrodes in combination with the DC biasing voltage.

6. The modulator according to claim 5 wherein the first and third electrodes are RF ground and the second electrode provides the RF signals.

7. A push-pull semiconductor PIN modulator comprising:
a substrate;
a first PIN device formed on the substrate and including an N-type layer, an intrinsic layer and a P-type layer;
a second PIN device formed on the substrate and including an N-type layer, an intrinsic layer and a P-type layer;
a first electrode formed on the substrate, said first electrode being electrically coupled to the N-type layer of the first PIN device and the P-type layer of the second PIN device; and
a biasing system, said biasing system providing an RF signal to the first electrode that causes the index of refraction of the intrinsic layer of the first PIN device to change in one direction and the index of refraction of the intrinsic layer of the second PIN device to change in an opposite direction to provide a push-pull effect.

8. The modulator according to claim 7 wherein the biasing system includes a DC bias network that provides a DC bias voltage to the first electrode.

9. The modulator according to claim 8 wherein the DC bias voltage reverse biases the first and second PIN devices.

10. The modulator according to claim 7 wherein further comprising a second electrode formed on the substrate and electrically coupled to the P-type layer of the first PIN device, and a third electrode formed on a substrate and electrically coupled to the N-type layer of the second PIN device.

11. The modulator according to claim 7 further comprising a Mach-Zehnder interferometer that is responsive to an optical signal being modulated by the RF signal.

12. The modulator according to claim 11 wherein the intrinsic layer of the first PIN device is an active region of a first optical arm of the Mach-Zehnder interferometer, and the intrinsic layer of the second PIN device is an active region of a second optical arm of the Mach-Zehnder interferometer.
